(19) Europäisches Patentamt
European Patent Office
Office européen des brevets

(11) EP 2 834 320 B1

# (12) FASCICULE DE BREVET EUROPEEN

(45) Date de publication et mention de la délivrance du brevet:
**21.02.2018 Bulletin 2018/08**

(21) Numéro de dépôt: **13719901.4**

(22) Date de dépôt: **19.03.2013**

(51) Int Cl.:
***C09K 8/68*** (2006.01) ***C09K 8/88*** (2006.01)
***C09K 8/80*** (2006.01)

(86) Numéro de dépôt international:
**PCT/FR2013/050583**

(87) Numéro de publication internationale:
**WO 2013/150203 (10.10.2013 Gazette 2013/41)**

(54) **NOUVELLE COMPOSITION AQUEUSE DE FLUIDE DE FRACTURATION ET PROCEDE DE FRACTURATION METTANT EN OEUVRE LE FLUIDE**

NEUE WÄSSRIGE FRAKTURIERUNGSFLUID-ZUSAMMENSETZUNG UND FRAKTURIERUNGSVERFAHREN MIT DEM FLUID

NEW AQUEOUS FRACTURING FLUID COMPOSITION AND FRACTURING METHOD IMPLEMENTING THE FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.04.2012 FR 1253029**
**19.04.2012 US 201261635534 P**

(43) Date de publication de la demande:
**11.02.2015 Bulletin 2015/07**

(73) Titulaire: **S.P.C.M. SA**
**42160 Andrézieux Bouthéon (FR)**

(72) Inventeurs:
- **FAVERO, Cédrick**
  **F-42610 Saint Romain Le Puy (FR)**
- **GAILLARD, Nicolas**
  **F-42000 Saint Etienne (FR)**

(74) Mandataire: **Cabinet Laurent & Charras**
**Le Contemporain**
**50 Chemin de la Bruyère**
**69574 Dardilly Cedex (FR)**

(56) Documents cités:
**WO-A1-02/084075** **WO-A1-2005/100423**
**FR-A1- 2 945 542**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

L'invention concerne une nouvelle composition de fluide de fracturation. Plus précisément l'invention concerne une nouvelle composition aqueuse de fluide de fracturation comprenant au moins un agent de soutènement et un copolymère amphotère associatif de haut poids moléculaire.

L'invention concerne aussi un nouveau procédé de fracturation des réservoirs d'huile et de gaz non conventionnels utilisant ladite composition.

La production d'huile et de gaz contenus dans des réservoirs non conventionnels se développe depuis plusieurs années et nécessite d'ouvrir des fractures dans le réservoir pour une production économique du pétrole et du gaz.

Par « réservoirs non conventionnels », on désigne des gisements nécessitant des technologies particulières d'extractions car n'existant pas sous forme d'une accumulation dans une roche poreuse et perméable (*cf Les hydrocarbures de roche-mère en France Rapport provisoire - CGIET n° 2011-04-G - Ministère de l'écologie, du développement durable, des transports et du logement - Avril 2011*). Pour le gaz non conventionnel, on peut citer les gaz de schiste (shale gas), les gaz de houille (coal bed methane) ou les gaz de réservoirs compacts (tight gas). Pour l'huile non conventionnelle, on peut citer les huiles lourdes (heavy oil), les huiles de schiste (shale oil) ou les huiles de réservoirs compacts (tight oil).

Les réserves contenues dans les réservoirs non conventionnels sont énormes et extrêmement étendues dans des zones autrefois inexploitables comme les hydrocarbures de roche-mère tel que les schistes argileux, les gaz de réservoir compact, et les gaz de houille. Aux Etats Unis, les gaz de schiste sont largement exploités et représentent aujourd'hui 46% du total du gaz naturel produit aux USA alors qu'ils ne représentaient que 28% en 1998. Les bassins très étendus sont connus sous le nom de Barnett Shale, Ville Fayette Shale, Mowry Shale, Marcellus Shale, Utica shale... L'exploitation des réservoirs compacts a été rendue possible par une évolution des techniques de forages.

Les techniques de production ont en effet évolué des puits verticaux vers des puits horizontaux, réduisant le nombre de puits de production nécessaire et leur empreinte au sol et permettant de mieux couvrir le volume du réservoir pour en récupérer au maximum le gaz. Cependant, les perméabilités sont insuffisantes pour que le gaz migre de la roche mère vers le puits facilement, et ainsi permettre de produire économiquement et en quantité le gaz ou le pétrole. Il est donc nécessaire d'augmenter la perméabilité et les surfaces de production par des opérations de stimulation et en particulier par fracturation hydraulique de la roche en contact avec le puits.

### Fracturation hydraulique

La fracturation hydraulique a pour but de créer une perméabilité supplémentaire et engendrer des surfaces de production de gaz ou de pétrole plus importantes. En effet, la faible perméabilité, les barrières naturelles de couches compactes, l'imperméabilisation par les opérations de forage limitent fortement la production. Le gaz ou l'huile contenu dans le réservoir non conventionnel, ne peut migrer facilement de la roche vers le puits sans stimulation.

Ces opérations de fracturation hydraulique sur les puits horizontaux ont commencé en 1960 dans les Appalaches et aujourd'hui plusieurs dizaines de milliers d'opérations ont eu lieues aux USA.

Les technologies d'étude, de modélisation du réservoir, de forage, de cimentation et de stimulation sont devenues de plus en plus sophistiquées et mettent en oeuvre des équipements permettant d'effectuer ces opérations dans des temps de plus en plus courts avec une analyse précise des résultats.

### La stimulation du réservoir par fracturation hydraulique

Ces opérations consistent à injecter de l'eau à haute pression et à très fort débit de manière à créer des fractures réparties perpendiculairement aux puits de production. On procède généralement en plusieurs étapes afin de créer des fractures sur toute la longueur du puits horizontal, ce qui permet de couvrir un volume maximal du réservoir.

Afin de garder ces fractures ouvertes, on ajoute un agent de soutènement (du sable, des matières plastiques ou des céramiques calibrées) de manière à empêcher la fermeture de ces fractures et de maintenir la capillarité créée une fois l'injection stoppée.

L'eau seule ne suffit pas à obtenir une bonne efficacité de placement de l'agent de soutènement du fait de sa faible viscosité. Ceci limite sa capacité à maintenir en place l'agent de soutènement dans les fractures. Pour contrer ce problème, on a développé des fluides de fracturation contenant des composés viscosifiants.

Par définition, on dira qu'un composé est viscosifiant lorsqu'il augmente la viscosité des solutions dans lesquelles il est dissous.

En plus d'avoir des propriétés viscosifiantes, le composé doit avoir un profil rhéologique particulier. En effet, le polymère doit pouvoir avoir une viscosité faible afin de ne pas gêner au transport et au pompage du fluide contenant l'agent de soutènement pendant les forts cisaillements subis lors de l'injection du fluide de fracturation. Une fois injecté, ce même composé doit pouvoir engendrer une viscosité suffisante lorsque le cisaillement diminue pour supporter l'agent

de soutènement afin de le maintenir dans les fractures.

Le polymère doit donc apporter des propriétés rhéofluidifiantes à la solution afin d'avoir une viscosité relativement faible lors de l'injection (à cisaillement élevé) et une viscosité forte afin de maintenir l'agent de soutènement en suspension au niveau de la fracture lorsque le cisaillement diminue.

Les propriétés viscoélastiques des polymères en solution sont également à prendre en considération. Cette viscoélasticité, et son importance dans l'application, est décrite dans le SPE 147206 (*Fracturing Fluid Comprised of Components Sourced Solely from the Food Industry Provides Superior Proppant Transport - David Loveless, Jeremy Holtsclaw, Rajesh Saini, Phil Harris, and Jeff Fleming, SPE, Halliburton*) à travers des observations visuelles dans des expériences statiques ou dynamiques, ou encore par des mesures de rhéologie, telle que la mesure des modules visqueux et élastiques (G' et G"), ou la mesure sur rhéomètre de la viscosité en fonction du cisaillement. Ainsi, des propriétés élastiques seront avantageuses pour assurer le transport et la suspension de l'agent de soutènement de la fracture.

Le choix du polymère n'est donc pas évident et nécessite une étude rhéologique approfondie afin d'obtenir des résultats satisfaisants.

Parmi les composés viscosifiants de solutions aqueuses appartenant à l'état de la technique, on peut citer les substances naturelles telle que les gommes guars et leurs dérivés tel que l'hydroxypropylguar (HPG), ou la carboxymethylhydroxypropyl guar (CMHPG) ; les dérivés cellulosiques tels que la carboxymethyl cellulose ou l'hydroxyethyl cellulose. Ces composés sont notamment décrits dans les brevets US4033415, US3888312 et US4801389. Dans le SPE 152596 (*Hydraulic Fracturing 101: What Every Representative, Environmentalist, Regulator, Reporter, Investor, University Researcher, Neighbor and Engineer Should Know About Estimating Frac Risk and Improving Frac Performance in Unconventional Gas and Oil Wells - George E. King, Apache Corporation),* les dernières avancées relatives aux performances des fluides de fracturation sont discutées en détail.

Cependant ces substances naturelles, et en particulier les dérivés de guar, sont aussi utiles dans d'autres applications, comme l'industrie alimentaire ou le textile, et l'essor de l'exploitation des ressources d'huile et de gaz non conventionnels concurrencent ces autres applications. Ceci crée une pression sur la disponibilité de ces produits et engendrent des problèmes de prix.

D'autres composés issus de la pétrochimie peuvent avoir des propriétés viscosifiantes. On peut citer les polymères synthétiques. Les poly(meth) acrylamides, éventuellement partiellement hydrolysés, et les poly(meth) acrylates et leurs copolymères sont particulièrement connus. Ces polymères développent une viscosité grâce à leur masse molaire et aux répulsions ioniques interchaînes. Ces polymères sont décrits dans les brevets GB951147, US3727689, US3841402 ou encore US3938594. Le mécanisme régissant la viscosité est lié à une hausse du volume hydrodynamique grâce à des répulsions intrachaînes, des enchevêtrements interchaines, etc.

Cependant, en présence de forte salinité ou d'une température d'utilisation élevée, ces polymères ne développent pas de forts enchevêtrements et répulsions, ce qui se traduit par une diminution forte de leur pouvoir viscosifiant surtout après avoir subi le cisaillement de l'étape de pompage. Par ailleurs, ces polymères généralement ne présentent pas de propriétés viscoélastiques suffisantes pour supporter l'agent de soutènement dans la fracture. Il faut augmenter le dosage de ces polymères à des niveaux trop élevés pour obtenir les propriétés de suspension de l'agent de soutènement. Les niveaux de dosages ne sont pas viables économiquement.

Afin d'améliorer les performances des polymères synthétiques précédemment cités, ceux ci ont été modifiés par introduction de groupements hydrophobes. Les polymères ainsi obtenus (comportant minoritairement des motifs apolaires et de façon majoritaire des motifs à caractère hydrophile) sont appelés associatifs. Ils nécessitent une masse moléculaire élevée et se caractérisent par le fait que lors de leur mise en solution, leurs groupements hydrophobes s'associent afin de limiter les interactions avec l'eau. La chute de viscosité liée à la présence d'électrolytes ou de températures élevées, source de baisse du volume hydrodynamique, est compensée par les interactions attractives interchaînes.

Dans le but d'augmenter ces interactions, les polymères sont favorablement mélangés avec d'autres composés.

La plupart des documents de l'art antérieur, s'intéresse à l'association du polymère en présence de tensioactifs afin de renforcer les associations apolaires inter-chaines ou au contraire les dissocier par stabilisation pour favoriser des interactions intra-chaînes.

Dans le brevet US4432881, une composition comprenant un tensioactif non ionique et un copolymère est revendiquée. Le copolymère peut être ionique ou non et comprend un monomère comportant une chaine hydrophobe pendante, d'au moins 8 carbones.

Plus récemment, la demande WO02/102917 décrit une composition aqueuse épaississante comprenant un ou plusieurs polymères constitués:

d'un monomère non ionique,
d'un monomère ionique,
d'un monomère hydrophobe.

Le nombre de monomères composant le polymère n'est pas limité. Il est clairement expliqué que deux monomères ne peuvent avoir une charge ionique opposée, ce qui signifie que le polymère n'est pas amphotère. En outre, une des caractéristiques essentielles de la composition est d'épaissir sous l'effet d'un fort cisaillement et vice versa ce qui est contraire à l'objectif de la présente invention.

La demanderesse a trouvé et mis au point une nouvelle composition aqueuse de fluide de fracturation comprenant, en solution dans l'eau, un agent de soutènement et un polymère amphotère associatif, le polymère présentant un poids moléculaire d'au moins 1,000,000 g/mol, et comprenant :

- 0.01 à 10 mol% d'au moins un monomère cationique dérivé d'acrylamide portant une chaîne hydrophobe et de formule générale (I):

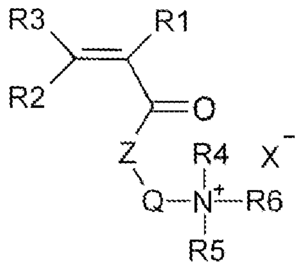

(I)

avec:

R1, R2 : indépendamment un hydrogène, $CH_3$, $CH_2COOH$, COOH, $CH_2COOR_7$ $COOR_7$, $CH_2CONR_7R_8$, $CONR_7R_8$
R3, R4, R5 : indépendamment un hydrogène, $CH_3$, $C_2H_5$
R6 : une chaîne alkyle ou aryl-alkyle comportant de 8 à 30 carbones
Q: une chaîne alkyle comportant de 1 à 8 carbones
Z : oxygène ou $NR_7$
R7, R8 ; indépendamment un hydrogène, une chaîne alkyle comportant de 1 à 8 carbones
X: un halogénure choisi dans le groupe comprenant le bromure, chlorure, iodure, fluorure, ou un contre ion de charge négative,

- de 0.09 à 89.99 mol % d'au moins un monomère anionique. Les monomères anioniques utiles dans la présente invention peuvent être choisis dans un large groupe. Ces monomères peuvent présenter des fonctionnalités acryliques, vinyliques, maléiques, fumariques, allyliques et contenir un groupe carboxylate, phosphonate, phosphate, sulfate, sulfonate, ou un autre groupe à charge anionique. Le monomère peut être acide ou bien sous forme de sel ou de métal alcalino terreux ou de métal alcalin correspondant d'un tel monomère. Des exemples de monomères convenables comprennent l'acide acrylique, l'acide méthacrylique, l'acide itaconique, l'acide crotonique, l'acide maléique, l'acide fumarique et les monomères de type acide fort présentant par exemple une fonction de type acide sulfonique ou acide phosphonique tels que l'acide 2-acrylamido 2-methylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, et d'ammonium.
- et de 10 à 99 mol % d'au moins un monomère hydrosoluble non ionique. Les monomères non ioniques utiles selon l'invention peuvent être choisis dans le groupe comprenant les monomères vinyliques solubles dans l'eau. Des monomères préférés appartenant à cette classe sont avantageusement choisis dans le groupe comprenant l'acrylamide et le méthacrylamide, le N-isopropylacrylamide, le N-N-diméthylacrylamide, le N-tert-butylacrylamide. Egalement, peuvent être utilisés la N-vinylformamide, le N-vinyl acetamide, la N-vinylpyridine et/ou la N-vinylpyrrolidone, l'acryloyl morpholine, acryloyl pyrrolidone. On peut également citer les méthacrylates d'alkyle-polyéthylène glycol. Un monomère non ionique préféré sera l'acrylamide.

Dans un mode de réalisation avantageux :

- R1, R2 : indépendamment un hydrogène ou $CH_3$,
- R3 : hydrogène,
- R4, R5 : $CH_3$,
- Q: une chaîne alkyle comportant de 2 ou 3 carbones,

- Z : oxygène ou NH.

Il a été trouvé, de manière surprenante, qu'il est possible d'obtenir des propriétés de soutènement supérieures et plus avantageuses qu'avec les solutions de l'art antérieur, en utilisant un polymère amphotère à base d'au moins un monomère cationique hydrophobe dérivés d'acrylamide, à base d'au moins un monomère anionique et à base d'au moins un monomère hydrosoluble non-ionique.

En particulier, les fluides possèdent des propriétés rhéologiques améliorées en ce qu'avec un dosage réduit en polymère, les fluides permettent d'atteindre de forts niveaux de viscosité pour des cisaillements inférieurs à $20s^{-1}$ et de faibles viscosités au-delà de $50s^{-1}$.

Ils présentent en outre des seuils d'écoulement favorables au maintien en suspension des agents de soutènement, au travers de la composition élastique du fluide.

Le polymère amphotère associatif permet en outre d'améliorer l'effet suspensif des agents de soutènement contenus dans le fluide de fracturation.

De préférence, les polymères associatifs de l'invention se présentent sous une forme sèche, en poudre ou en billes ou sous forme liquide, en tant qu'émulsion inverse ou dispersion aqueuse (émulsion eau dans eau).

Selon un mode de réalisation particulier de l'invention, la nouvelle composition aqueuse de fluide de fracturation peut éventuellement comprendre au moins un tensioactif en faible quantité. En effet il a été trouvé, de manière surprenante, que l'association dudit polymère associatif amphotère avec une faible concentration en tensioactif permet d'obtenir des propriétés viscosifiantes améliorées. De manière préférentielle la nouvelle composition aqueuse de fluide de fracturation comprend jusqu'à 500 ppm d'au moins un tensioactif.

Selon ce mode de réalisation particulier, et de manière avantageuse, le tensioactif n'est pas un tensioactif viscoélastique tel que décrit dans WO02/084075.

Le fluide de fracturation peut également contenir des agents de ramification agissant après l'injection, comme :

- les sels de métaux polyvalents à base de zirconium, d'aluminium ou de chrome,
- les agents de post greffage, le formaldéhyde, le glyoxal, les polyéthylenimines, les éthylenamines,

Selon l'invention, le polymère utilisé n'est pas réticulé. Sa structure peut être linéaire, branché, star (en forme d'étoile) ou comb (en forme de peigne). Ces structures peuvent être obtenues par sélection au choix de l'initiateur, de l'agent de transfert, de la technique de polymérisation telle que la polymérisation radicalaire controlée, de l'incorporation de monomères structuraux, de la concentration....

Des agents covalents aptes à copolymériser avec les monomères et de préférence des monomères à multiples insaturations polyéthyléniques peuvent être utilisés (ayant au minimum deux fonctions insaturées), comme par exemple les fonctions vinyliques, allyliques, acryliques et époxy et l'on peut citer par exemple le méthylène bis acrylamide (MBA), la triallyamine.

Les polymères associatifs amphotères utilisés dans l'invention sont préférentiellement des polymères comprenant :

- de 0,05 à 5 mol% de monomère cationique hydrophobe,
- de 5 à 54.95 mol% d'au moins un monomère anionique, avantageusement l'acide acrylique et/ou l'acide méthacrylique et/ou l'acide 2-acrylamido-2-methylpropane sulfonique et leurs sels,
- et de 45 à 90 mol% d'au moins un monomère non ionique hydrosoluble, avantageusement l'acrylamide et/ou le N-isopropylacrylamide et/ou le N-N-diméthylacrylamide et/ou le N-tert-butylacrylamide et/ou le N-vinylformamide et/ou N-vinylpyrrolidone et/ou l'acryloyl morpholine et/ou l'acryloyl pyrrolidone.

Les polymères associatifs amphotères utilisés dans l'invention sont plus préférentiellement des polymères comprenant :

- de 0,05 à 2 mol% de monomère cationique hydrophobe,
- de 5 à 24.95 mol% d'au moins un monomère anionique sulfoné tel que l'acide 2-acrylamido-2-methylpropane sulfonique et ses sels,
- de 0 à 30 mol% de monomère anionique carboxylate tel que l'acide acrylique et ses sels,
- et de 45 à 90 mol% d'au moins un monomère non ionique hydrosoluble, tel que l'acrylamide.

Les monomères cationiques hydrophobes dérivés d'acryliques (acrylate ou acrylamido) préférés de l'invention sont le chlorure de N-acrylamidopropyl-N,N-diméthyl-N-dodécyl ammonium (DMAPA Cl(C12)), le chlorure de N-méthacrylamidopropyl-N,Ndiméthyl-N-dodécyl ammonium (DMAPMA Cl(C12)), le bromure de N-acrylamidopropyl-N,N-diméthyl-N-dodécyl ammonium (DMAPA Br(C 12)), le bromure de N-méthacrylamidopropyl-N,N-diméthyl-N-dodécyl ammonium (DMAPMA Br(C12)), le chlorure de N-acrylamidopropyl-N,N-diméthyl-N-octadécyl ammonium (DMAPA Cl(C 18)), le chlorure de N-méthacrylamidopropyl-N,N-diméthyl-N-octadécyl ammonium (DMAPMA Cl(C18)), le bromure de N-acrylamidopropyl-N,N-diméthyl-N-octadécyl ammonium (DMAPA Br(C 18)), le bromure de N-méthacrylamidopropyl-N,N-diméthyl-N-octadécyl ammonium (DMAPMA Br(C18)), le bromure de N-hemimaléate d'éthyle, N,N-diméthyle, N-decyl ammonium, le bromure d N-acrylate d'éthyle N,N diméthyle- N dodecyl ammonium.

La demanderesse a aussi mis au point un nouveau procédé de fracturation hydraulique caractérisé par l'injection de la dite composition.

La composition du fluide comprend au moins un agent de soutènement, un agent viscosifiant de type polymère tel que précédemment décrit et de l'eau, avantageusement une saumure.

Par « saumure », on désigne une solution aqueuse comportant une quantité de sels inorganiques. On peut citer à titre d'exemple les sels de sodium, de magnésium ou de calcium et leurs contre ions chlorure, sulfate, carbonate, etc.

L'agent de soutènement tel que le sable, la céramique, la bauxite, les billes de verre, le sable imprégné de résine, représente de 0,5 à 40% en poids du fluide, préférentiellement de 1 à 25% en poids du fluide, encore plus préférentiellement de 1,5 à 20% en poids du fluide.

Le polymère de la présente invention représente entre 0,05% à 2%, préférentiellement de 0,1% à 1% et encore plus préférentiellement de 0,1 à 0,75% en poids du fluide.

La composition aqueuse peut comprendre d'autres composés connus de l'homme de l'art (tel que résumé dans le SPE 152596):

- Des agents anti-gonflement des argiles comme le chlorure de potassium, ou le chlorure de choline

Des biocides pour éviter le développement de bactéries en particulier sulfato réductrices pouvant former des masses visqueuses réduisant les surfaces de passage. Le glutaraldehyde est le plus utilisé, ou encore le formaldéhyde ou les isothiazolinones

- Des réducteurs d'oxygène comme le bisulfite d'ammonium pour éviter la destruction des autres composants par oxydation et la corrosion des tubes d'injection,
- Des additifs anticorrosion pour protéger les tubes contre l'oxydation par les quantités résiduelles d'oxygène. C'est le N,N dimethylformamide qui est privilégié,
- Des lubrifiants comme les distillats de pétrole,
- Des chelatants pour le fer comme l'acide citrique, l'EDTA, des phosphonates,
- Des produits antitartre comme des phosphates, phosphonates, les polyacrylates ou éthylène glycol,
- Des réducteurs de frottement permettant de réduire la perte de charge en milieu turbulent et augmenter fortement le débit à puissance et diamètre de tuyau identique.

Les polymères hydrosolubles utilisés dans l'invention ne nécessitent pas de développement de procédé de polymérisation particulier. Ils peuvent être obtenus par toutes les techniques de polymérisation bien connues par l'homme de métier (polymérisation en solution, polymérisation en suspension, polymérisation en gel, polymérisation par précipitation, polymérisation en émulsion (aqueuse ou inverse) suivie ou non d'une étape de spray drying, polymérisation en suspension, polymérisation en suspension inverse, polymérisation micellaire suivie ou non d'une étape de précipitation, polymérisation post-hydrolyse ou co-hydrolyse, polymérisation dite « template », radicalaire, ou encore radicalaire contrôlée.

Le polymère se présente préférentiellement sous forme de poudre, d'émulsion inverse, ou d'une dispersion aqueuse. Dans le cas où il est sous forme d'émulsion inverse ou d'une dispersion dans l'eau, il peut être mis en solution, soit directement dans la saumure ou fluide d'injection, soit en utilisant la méthode décrite dans le document US2011/0118153 qui propose la mise en solution, en ligne et en continue, d'émulsions inverses de polymères hydrosolubles.

Dans le cas où il est sous forme de poudre, cette dissolution peut se faire, notamment, au moyen d'une unité telle que décrite dans le document WO 2008/107492, et commercialisée par la demanderesse sous la référence PSU « Polymer Slicing Unit ».

L'installation compacte et transportable décrite dans la demande WO 2010/020698 est particulièrement adaptée pour les opérations de fracturation.

L'invention a également pour objet un procédé de fracturation de réservoir d'huile ou de gaz non conventionnel selon lequel :

- on prépare le fluide de fracturation tel que décrit précédemment,
- on injecte le fluide sous pression de manière à créer des fractures réparties perpendiculairement au puits de production.

Optionnellement après la création des fractures, on injecte dans le réservoir au moins un composé oxydant et/ou d'au moins un composé tensioactif. De manière avantageuse, on injectera au moins un composé tensioactif à haute concentration.

L'injection de tensioactif à haute concentration permet d'éliminer la viscosité engendrée par le polymère en inhibant les interactions hydrophobes interchaînes, tandis que l'injection du composé oxydant détruit le polymère. Dans les deux cas l'injection permet de rétablir une viscosité de fluide proche de celle de l'eau.

Dans le cas d'injection d'un composé tensioactif, après fracturation, la concentration est d'au moins 500 ppm, de préférence d'au moins 1000 ppm, plus préférentiellement d'au moins 2000 ppm.

Comme composé oxydant, on peut citer la javel, les persulfates, les permanganates ou les perchlorates.

La nature chimique du (ou des) composé(s) tensio-actif n'est pas critique. Ils peuvent être anioniques, non ioniques, amphotères, zwitterioniques et/ou cationiques. De préférence, le(s) composé(s) tensio-actif de l'invention porte(nt) des charges anioniques.

De préférence, les composés tensioactifs utilisés sont choisis parmi les tensio-actifs anioniques et leurs zwitterions choisis dans le groupe comprenant les dérivés d'alkylsulfates, alkyléthersulfates, arylalkylsulfates, arylalkyléthersulfates, les alkylsulfonates, alkyléthersulfonates, arylalkylsulfonates les arylalkyléthersulfonates, les alkylphosphates, alkylétherphosphates, arylalkylphosphates, arylalkylétherphosphates, les alkylphosphonates, alkylétherphosphonates, arylalkylphosphonates, arylalkylétherphosphonates, les alkylcarboxylates, alkyléthercarboxylates, arylalkylcarboxylates arylalkyléthercarboxylates, les polyethers alkyles, polyethers arylalkyles...

On définit par chaine alkyle, une chaine de 6 à 24 carbones, ramifiée ou non, avec plusieurs motifs ou non, pouvant éventuellement comporter un ou plusieurs hétéroatomes (O, N, S). On définit par chaine arylalkyle, une chaine de 6 à 24 carbones, ramifiée ou non, comportant un ou plusieurs noyaux aromatiques et pouvant éventuellement comporter un ou plusieurs hétéroatomes (O, N, S).

Les agents tensio-actifs les plus couramment utilisés, pour des raisons de coût, de stabilité, et de disponibilité, sont du type sulfonate ou sulfate, présentés sous la forme de sels de métaux alcalins ou d'ammonium.

L'invention et les avantages qui en résultent ressortiront bien des exemples de réalisation suivants, à l'appui des figures annexées.

La figure 1 est un graphe comparant la viscosité dans l'eau de mer, de différents polymères de l'art antérieur par rapport à celle d'un polymère présent dans le fluide selon l'invention en fonction du taux de cisaillement appliqué à 20°C.

La figure 2 est un graphe comparant la viscosité dans l'eau de mer, de différents polymères de l'art antérieur par rapport à celle d'un polymère présent dans le fluide selon l'invention en fonction du taux de cisaillement appliqué à 50°C.

La figure 3 est un graphe comparant la viscosité dans l'eau de mer, de différentes gommes guar par rapport à celle d'un polymère présent dans le fluide selon l'invention en fonction du taux de cisaillement appliqué.

La figure 4 est un graphe comparant la viscosité dans l'eau de mer, d'une gomme guar par rapport à celle d'un polymère présent dans le fluide selon l'invention en fonction du taux de cisaillement appliqué et à différentes salinités.

## EXEMPLES 1:

### Préparation du polymère par polymérisation en gel:

Dans un bêcher, on dissout x mol% de monomère cationique hydrophobe dérivé d'acrylamide, y mol% d'acide acrylique, z mol% d'acrylamide dans l'eau afin d'obtenir une teneur en matière active de 30%. Des additifs précédemment décrits peuvent avantageusement être additionnés à cet instant pour améliorer la solubilisation des monomères. La somme de x+y+z est égale à 100. La solution est alors agitée, refroidie et neutralisée par ajout de soude. La solution est alors introduite dans un dewar puis dégazée sous flux d'azote pour ôter l'oxygène.

La polymérisation est amorcée à l'aide d'un couple red/ox. La température augmente adiabatiquement.

Le gel obtenu est laissé 3 heures dans le dewar. Il est ensuite broyé puis séché une nuit à l'étuve. On obtient une poudre blanche qui est à nouveau broyée.

1/ Préparation de la solution aqueuse de polymère

L'extrait sec du polymère doit être déterminé afin de connaître le pourcentage de matière active : peser de manière précise à 0.001g près une coupelle en verre. Noter $M_c$ cette masse. Peser 10 g de poudre dans une coupelle en verre et noter la masse cumulée $M_{c+p}$. Placer cette coupelle en verre pendant 2 heures dans une étuve à 120°C.

Après les 2 heures à 120°C, laisser refroidir la coupelle dans un dessiccateur. Peser la coupelle avec la masse de solide récupérée sèche notée $M_{c+ps}$. Le pourcentage de matière sèche X est donné par le calcul :

$$X = [(M_{c+ps}-M_c)/(M_{c+p}-M_c)]*100 \text{ exprimé en } \%$$

La solution de polymère est préparée selon le protocole général suivant :

Préparation d'une solution mère à 10 g/l de polymère (produit de l'invention ou gomme guar en poudre)

Dans un bécher de 400 mL, peser 200-(2/(X/100)) g de saumure représentative de l'eau d'injection utilisée sur champ de fracturation. A l'aide d'un agitateur mécanique, agiter la solution à une vitesse de 500 tours/minute. 2/(X/100) g de polymère sec sous forme de poudre sont ajoutés lentement dans le mur du vortex formé par l'agitation à température ambiante. La solution est laissée agitée pendant 2 heures.

Dilution de la solution mère pour obtenir une solution diluée à Y % de concentration finale en polymère.

Y *100 g de la solution mère à 10 g/l sont prélevés à la seringue et transférés dans un bécher de 400 mL. 100-Y g de saumure préalablement préparée sont ajoutés dans le bêcher. La solution est alors agitée à l'aide d'un barreau magnétique à 250 tours/minute pendant 20 minutes.

2/ Evaluation rhéologique des polymères

Les échantillons de gomme guar évaluées sont les ECOPOL™ 500 et GW 27. Ces produits correspondent à des gommes guars utilisées sur les champs de fracturation aux Etats Unis.

Les polymères présents dans le fluide de la présente invention sont numérotés de 1 à 4 et sont décrits dans le tableau suivant. A titre comparatif, un polymère anionique non associatif de très haute masse molaire est évalué également : polymère 5 ainsi qu'un polymère amphotère à caractère non associatif décrit dans l'art antérieur WO 02/084075: polymère 6.

| Produits | Acrylamide (mol%) | Acrylate de sodium (mol%) | Acrylamido terbutyl sulfonate de sodium (mol%) | Chlorure de Diallyl-diméthyl-ammonium (DADMAC) (mol%) | Monomère associatif de type $C_{12}H_{25}$ (mol%) | Mw (millions g/mol) |
|---|---|---|---|---|---|---|
| Polymère 1 | 85 | 14.8 | 0 | 0 | 0.2 | 6-8 |
| Polymère 2 | 85 | 0 | 14.8 | 0 | 0.2 | 4-7 |
| Polymère 3 | 85 | 4.8 | 10 | 0 | 0.2 | 7-10 |
| Polymère 4 | 80 | 4.8 | 15 | 0 | 0.2 | 6-8 |
| Polymère 5 | 75 | 25 | 0 | 0 | 0 | 18-20 |
| Polymère 6 | 80 | 18 | 0 | 2 | 0 | 6-8 |

Les propriétés rhéologiques sont déterminées à l'aide d'un rhéomètre Malvern Bohlin Gemini avec une géométrie cône/plan d'angle 2° et de diamètre 6 cm. Un système de chauffage et de refroidissement Peltier est utilisé pour pouvoir réaliser des mesures à différentes températures.

Les conditions expérimentales sont décrites sur chaque figure 1 à 4.

Les viscosités en fonction du cisaillement à différentes températures sont données dans les figures 1 à 4. La concentration cible de polymère est de 2000 ppm.

Commentaires : On constate qu'à 2000 ppm de polymère et à faible cisaillement les polymères utilisés dans

la présente invention développent tous une viscosité nettement supérieure à la gomme guar testées et ce à 20°C et 50°C. Ceci est particulièrement amplifié pour des cisaillements inférieurs à $10s^{-1}$ ce qui est la propriété recherchée pour bien maintenir en suspension l'agent de soutènement. On note qu'au-delà de $50s^{-1}$, les viscosités sont pour tous les produits évalués faibles, ce qui assure de bonnes propriétés de pompage.

L'utilisation d'un polymère non associatif de même que l'utilisation d'un polymère amphotère non associatif n'est pas non plus bénéfique.

A l'opposé et ce malgré la forte salinité, on note que le produit associatif utilisé dans l'invention est 100 à 1000 fois plus visqueux dans la zone de cisaillement utile à la suspension de l'agent de soutènement. La viscosité des gommes guar étudiées est quasi identique.

Le polymère utilisé dans l'invention a une viscosité plus importante que la gomme guar testée, quelque soit la salinité de la saumure utilisée. Quelque soit la salinité de l'eau utilisée pour la préparation du fluide de stimulation le polymère utilisé dans l'invention a donc un meilleur pouvoir suspensif et maintien dans tous les cas un pouvoir suspensif amélioré, en particulier à faible cisaillement.

Même à haute salinité, la viscosité du polymère utilisé dans l'invention reste bien au dessus des autres polymères testés.

## EXEMPLE 2

Test de sédimentation du sable

Des solutions de 230 g de polymère à 3000 ppm dans de l'eau de mer synthétique sont préparées selon le protocole décrit précédemment. A chaque solution sont ajoutés 20 g de sable utilisé dans les projets de fracturation. Les solutions sont alors agitées à l'aide d'un agitateur mécanique à 400 tours/minute pendant 5 minutes. Chaque solution est alors transvasée dans une éprouvette graduée de 250 mL et un chronomètre est déclenché au même moment. Le temps correspondant à la sédimentation totale du sable est enregistré et est donné dans le tableau suivant

| Produits | Temps de sédimentation des 20 g de sable |
|---|---|
| ECOPOL 500 | Inférieur à 2 minutes |
| Polymère 1 | 15 minutes |
| Polymère 2 | 20 minutes |
| Polymère 4 | 25 minutes |
| Polymère 6 | Inférieure à 2 minutes |

Les temps de sédimentation du sable sont beaucoup plus longs pour les produits de l'invention que pour la gomme guar. Les produits de l'invention ont un bien meilleur pouvoir suspensif du sable que la gomme guar.

Dégradation de la viscosité par l'ajout de tensioactif après fracturation

Lors de l'étape de production, une fois que le sable a été mis en place, la viscosité du polymère doit être abaissée afin de faciliter le placement du sable dans les fractures. Généralement l'injection d'oxydant est utilisée pour détruire le polymère et rétablir une viscosité de fluide proche de celle de l'eau.
Afin de mettre en évidence l'impact des tensioactifs sur les solutions de polymères en présence de sable, le même protocole de sédimentation a été utilisé. Une solution de tensioactif (dodécylsulfate de sodium (SDS)) à 10% est ajoutée (5 g soit 2000 ppm) sous agitation 30 secondes avant le transvasement dans l'éprouvette. Le temps correspondant à la sédimentation totale du sable est enregistré et est donnée dans le tableau suivant :

| Produits | Temps de sédimentation des 20 g de sable |
|---|---|
| ECOPOL 500 | Inférieur à 2 minutes |
| Polymère 1+ SDS | Inférieur à 2 minutes |
| Polymère 2 + SDS | Inférieur à 2 minutes |
| Polymère 4 + SDS | Inférieur à 2 minutes |
| Polymère 6 + SDS | Inférieur à 2 minutes |

On constate en comparant ce tableau avec les résultats précédents que l'ajout d'une quantité suffisante de SDS après fracturation permet de réduire drastiquement le temps de sédimentation du sable. Il est donc avantageux d'utiliser le polymère de la présente invention pour ses propriétés de soutènement de sable mais aussi pour la facilité de réduire à postériori la viscosité de la solution par ajout de tensioactif après fracturation.

EXEMPLE 3 : Mesure de la viscosité du fluide de fracturation après ajout de tensioacif et avant injection

Le polymère 1 est dissous dans une eau à 30 g/l de NaCl afin d'obtenir une concentration finale à 5000 ppm. Des solutions identiques sont préparées à partir des polymères 3, 4 et 6.

La viscosité de chacune des solutions polymériques est mesurée à l'aide d'un viscosimètre Brookfield LVT à 20°C.
350 ppm de SDS sont ensuite ajoutés dans chacune des solutions polymériques.
La viscosité de chacune des solutions polymériques contenant étalement le SDS est mesurée à l'aide d'un viscosimètre Brookfield LVT à 20°C.

Après addition de SDS, la viscosité des solutions contenant les polymères 1, 3 et 4 augmente de 250, 230 et 280 % respectivement. En revanche, aucun changement notable de la viscosité de la solution contenant le polymère 6 de l'art antérieur n'est observé.

## Revendications

1. Fluide de fracturation comprenant, en solution dans l'eau, un agent de soutènement et un polymère amphotère associatif, ledit polymère présentant un poids moléculaire d'au moins 1,000,000 g/mol, et comprenant :

   - 0.01 à 10 mol% d'au moins un monomère cationique dérivé d'acrylamide portant une chaîne hydrophobe et de formule générale (I):

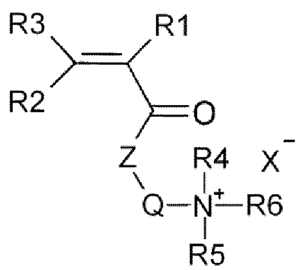

(I)

avec:

R1, R2 : indépendamment un hydrogène, $CH_3$, $CH_2COOH$, COOH, $CH_2COOR_7$ $COOR_7$, $CH_2CONR_7R_8$, $CONR_7R_8$
R3, R4, R5 : indépendamment un hydrogène, $CH_3$, $C_2H_5$
R6 : une chaîne alkyle ou aryl-alkyle comportant de 8 à 30 carbones
Q: une chaîne alkyle comportant de 1 à 8 carbones
Z : oxygène ou $NR_7$
R7, R8 ; indépendamment un hydrogène, une chaîne alkyle comportant de 1 à 8 carbones
X: un halogénure choisi dans le groupe comprenant le bromure, chlorure, iodure, fluorure, ou un contre ion de charge négative,

   - de 0.09 à 89.99 mol % d'au moins un monomère anionique,
   - et de 10 à 99 mol % d'au moins un monomère hydrosoluble non ionique.

2. Fluide de fracturation selon la revendication 1, **caractérisé en ce qu'**il comprend en outre jusqu'à 500 ppm d'au moins un tensioactif.

3. Fluide de fracturation selon la revendication 1 ou 2, **caractérisé en ce que** :

   - R1, R2 : indépendamment un hydrogène ou $CH_3$, R3 : hydrogène,

- R4, R5 : $CH_3$,
- Q: une chaîne alkyle comportant de 2 ou 3 carbones
- Z : oxygène ou NH

**4.** Fluide de fracturation selon l'une des revendications précédentes, **caractérisé en ce que** l'agent de soutènement est choisi dans le groupe comprenant le sable, la céramique, la bauxite, les billes de verre, le sable imprégné de résine.

**5.** Fluide de fracturation selon l'une des revendications précédentes, **caractérisé en ce que** l'agent de soutènement représente de 0,5 à 40% du fluide, préférentiellement de 1 à 25% du fluide, avantageusement de 1,5 à 20% en poids du fluide.

**6.** Fluide de fracturation selon l'une des revendications précédentes, **caractérisé en ce que** le polymère représente entre 0.05% à 2%, préférentiellement de 0.1% à 1% avantageusement de 0.1 à 0.75% en poids du fluide.

**7.** Fluide de fracturation selon l'une des revendications précédentes, **caractérisé en ce que** les monomères cationiques dérivés d'acryliques (acrylate ou acrylamido) sont choisis dans le groupe comprenant le chlorure de N-acrylamidopropyl-N,N-diméthyl-N-dodécyl ammonium (DMAPA Cl(C12)), le chlorure de N-méthacrylamidopropyl-N,Ndiméthyl-N-dodécyl ammonium (DMAPMA Cl(C12)), le bromure de N-acrylamidopropyl-N,N-diméthyl-N-dodécyl ammonium (DMAPA Br(C 12)), le bromure de N-méthacrylamidopropyl-N,N-diméthyl-N-dodécyl ammonium (DMAPMA Br(C12)), le chlorure de N-acrylamidopropyl-N,N-diméthyl-N-octadécyl ammonium (DMAPA Cl(C18)), le chlorure de N-méthacrylamidopropyl-N,N-diméthyl-N-octadécyl ammonium (DMAPMA C1(C18)), le bromure de N-acrylamidopropyl-N,N-diméthyl-N-octadécyl ammonium (DMAPA Br(C 18)), le bromure de N-méthacrylamidopropyl-N,N-diméthyl-N-octadécyl ammonium (DMAPMA Br(C18)), le bromure de N-hemimaléate d'éthyle, N,N-diméthyle, N-decyl ammonium, le bromure d N-acrylate d'éthyle N,N diméthyle- N dodecyl ammonium.

**8.** Fluide de fracturation selon l'une des revendications précédentes, **caractérisé en ce que** les monomères anioniques sont choisis dans le groupe comprenant l'acide acrylique, l'acide méthacrylique, l'acide itaconique, l'acide crotonique, l'acide maléique, l'acide fumarique, l'acide 2-acrylamido2-methylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, et d'ammonium.

**9.** Fluide de fracturation selon l'une des revendications précédentes, **caractérisé en ce que** les monomères non ioniques sont choisis dans le groupe comprenant l'acrylamide et le méthacrylamide, le N-isopropylacrylamide, le N-N-diméthylacrylamide, le N-tert-butylacrylamide, la N-vinylformamide, le N-vinyl acetamide, la N-vinylpyridine et/ou la N-vinylpyrrolidone, l'acryloyl morpholine, acryloyl pyrrolidone, les méthacrylates d'alkyle-polyéthylène glycol.

**10.** Fluide de fracturation selon l'une des revendications 1 à 6, **caractérisé en ce que** le polymère comprend :

- de 0,05 à 5 mol% de monomère cationique hydrophobe,
- de 5 à 54.95 mol% d'au moins un monomère anionique, avantageusement l'acide acrylique et/ou l'acide méthacrylique et/ou l'acide 2-acrylamido-2-methylpropane sulfonique et leurs sels,
- et de 45 à 90 mol% d'au moins un monomère non ionique hydrosoluble, avantageusement l'acrylamide et/ou le N-isopropylacrylamide et/ou le N-N-diméthylacrylamide et/ou le N-tert-butylacrylamide et/ou le N-vinylformamide et/ou N-vinylpyrrolidone et/ou l'acryloyl morpholine et/ou l'acryloyl pyrrolidone.

**11.** Fluide de fracturation selon l'une des revendications 1 à 6, **caractérisé en ce que** le polymère comprend :

- de 0,05 à 2 mol% de monomère cationique hydrophobe,
- de 5 à 24.95 mol% d'au moins un monomère anionique sulfoné tel que l'acide 2-acrylamido-2-methylpropane sulfonique et ses sels,
- de 0 à 30 mol% de monomère anionique carboxylate tel que l'acide acrylique et ses sels,
- et de 45 à 90 mol% d'au moins un monomère non ionique hydrosoluble, tel que l'acrylamide.

**12.** Procédé de fracturation de réservoir d'huile ou de gaz non conventionnel selon lequel :

- on prépare le fluide de fracturation selon l'une des revendications 1 à 9,
- on injecte le fluide sous pression de manière à créer des fractures réparties perpendiculairement au puits de production.

13. Procédé selon la revendication 12, **caractérisé en ce qu'**on injecte ensuite dans le réservoir au moins un composé oxydant et/ou au moins un composé tensioactif.

**Patentansprüche**

1. Frakturierungsfluid, das, in Wasser gelöst, ein Stützmittel und ein amphoteres Assoziativpolymer umfasst, wobei das Polymer ein Molekulargewicht von mindestens 1.000.000 g/mol aufweist, und Folgendes umfasst:

- 0,01 bis 10 Mol-% des mindestens einen kationischen Acrylamidderivat-Monomers mit einer hydrophoben Kette und der allgemeinen Formel (I):

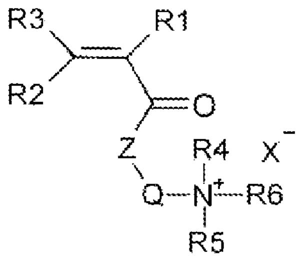

(I)

wobei:

R1, R2 unabhängig ein Wasserstoff, $CH_3$, $CH_2COOH$, COOH, $CH_2COOR_7$ $COOR_7$, $CH_2CONR_7R_8$, $CONR_7R_8$ sind,
R3, R4, R5 unabhängig ein Wasserstoff, $CH_3$, $C_2H_5$ sind,
R6 eine Alkyl- oder Arylalkylkette mit 8 bis 30 Kohlenstoffen ist,
Q eine Alkylkette mit 1 bis 8 Kohlenstoffen ist,
Z Sauerstoff oder $NR_7$ ist,
R7, R8 unabhängig ein Wasserstoff, eine Alkylkette mit 1 bis 8 Kohlenstoffen sind,
X ein Halogenid ist, ausgewählt aus der Gruppe umfassend Bromid, Chlorid, Iodid, Fluorid oder ein Gegenion mit negativer Ladung,

- von 0,09 bis 89,99 mol % mindestens eines anionischen Monomers,
- und von 10 bis 99 mol % mindestens eines wasserlöslichen nicht-ionischen Monomers.

2. Frakturierungsfluid nach Anspruch 1, **dadurch gekennzeichnet, dass** es des Weiteren bis zu 500 ppm mindestens eines grenzflächenaktiven Mittels umfasst.

3. Frakturierungsfluid nach Anspruch 1 oder 2, **dadurch gekennzeichnet, dass**:

- R1, R2 unabhängig ein Wasserstoff oder $CH_3$ sind, R3 Wasserstoff ist,
- R4, R5 $CH_3$ sind,
- Q eine Alkylkette mit 2 oder 3 Kohlenstoffen ist,
- Z Sauerstoff oder NH ist.

4. Frakturierungsfluid nach einem der vorhergehenden Ansprüche, **dadurch gekennzeichnet, dass** das Stützmittel ausgewählt ist aus der Gruppe umfassend Sand, Keramik, Bauxit, Glasperlen, mit Harz imprägnierten Sand.

5. Frakturierungsfluid nach einem der vorhergehenden Ansprüche, **dadurch gekennzeichnet, dass** das Stützmittel von 0,5 bis 40 % des Fluids, vorzugsweise von 1 bis 25 % des Fluids, vorteilhafterweise von 1,5 bis 20 Gew.-% des Fluids ausmacht.

6. Frakturierungsfluid nach einem der vorhergehenden Ansprüche, **dadurch gekennzeichnet, dass** das Polymer zwischen 0,05 % und 2 %, vorzugsweise von 0,1 % bis 1 %, vorteilhafterweise von 0,1 bis 0,75 Gew.-% des Fluids ausmacht.

7. Frakturierungsfluid nach einem der vorhergehenden Ansprüche, **dadurch gekennzeichnet, dass** die kationischen Acrylsäurederivat-Monomere (Acrylat oder Acrylamido) ausgewählt sind aus der Gruppe umfassend das N-Acrylamidopropyl-N,N-dimethyl-N-dodecylammoniumchlorid (DMAPA C1 (C12)), N-Methacrylamidopropyl-N,N-dimethyl-N-dodecylammoniumchlorid (DMAPMA C1 (C12)), N-Acrylamidopropyl-N,N-dimethyl-N-dodecylammoniumbromid (DMAPA Br (C12)), N-Methacrylamidopropyl-N,N-dimethyl-N-dodecylammoniumbromid (DMAPMA Br (C12)), N-Acrylamidopropyl-N,N-dimethyl-N-octadecylammoniumchlorid (DMAPA C1 (C18)), N-Methacrylamidopropyl-N,N-dimethyl-N-octadecylammoniumchlorid (DMAPMA C1 (C18)), N-Acrylamidopropyl-N,N-dimethyl-N-octadecylammoniumbromid (DMAPA Br (C 18)), N-Methacrylamidopropyl-N,N-dimethyl-N-octadecylammoniumbromid (DMAPMA Br (C18)), N-Ethylhemimaleatbromid, N,N-Dimethyl, N-Decylammonium, N-Ethylacrylat-N,N-dimethyl-N-dodecylammoniumbromid.

8. Frakturierungsfluid nach einem der vorhergehenden Ansprüche, **dadurch gekennzeichnet, dass** die anionischen Monomere ausgewählt sind aus der Gruppe umfassend Acrylsäure, Methacrylsäure, Itaconsäure, Crotonsäure, Maleinsäure, Fumarsäure, 2-Acrylamido2-methylpropan-Sulfonsäure, Vinylsulfonsäure, Vinylphosphonsäure, Allylsulfonsäure, Allylphosphonsäure, Styrolsulfonsäure und ihre wasserlöslichen Alkalimetall-, Erdalkalimetall- und Ammoniumsalze.

9. Frakturierungsfluid nach einem der vorhergehenden Ansprüche, **dadurch gekennzeichnet, dass** die nicht-ionischen Monomere ausgewählt sind aus der Gruppe umfassend Acrylamid und Methacrylamid, N-Isopropylacrylamid, N-N-Dimethylacrylamid, N-tert-Butylacrylamid, N-Vinylformamid, N-Vinylacetamid, N-Vinylpyridin und/oder N-Vinylpyrrolidon, Acryloylmorpholin, Acryloylpyrrolidon, Alkyl-Polyethylenglykol-Methacrylate.

10. Frakturierungsfluid nach einem der Ansprüche 1 bis 6, **dadurch gekennzeichnet, dass** das Polymer Folgendes umfasst:

- von 0,05 bis 5 mol% des hydrophoben kationischen Monomers,
- von 5 bis 54,95 mol% mindestens eines anionischen Monomers, vorteilhafterweise Acrylsäure und/oder Methacrylsäure und/oder 2-Acrylamido-2-methylpropansulfonsäure und ihre Salze,
- und von 45 bis 90 mol% mindestens eines wasserlöslichen nicht-ionischen Monomers, vorteilhafterweise Acrylamid und/oder N-Isopropylacrylamid und/oder N-N-Dimethylacrylamid und/oder N-tert-Butylacrylamid und/oder N-Vinylformamid und/oder N-Vinylpyrrolidon und/oder Acryloylmorpholin und/oder Acryloylpyrrolidon.

11. Frakturierungsfluid nach einem der Ansprüche 1 bis 6, **dadurch gekennzeichnet, dass** das Polymer Folgendes umfasst:

- von 0,05 bis 2 mol% des hydrophoben kationischen Monomers,
- von 5 bis 24,95 mol% mindestens eines sulfonierten anionischen Monomers, wie zum Beispiel 2-Acrylamido-2-methylpropansulfonsäure und ihre Salze,
- von 0 bis 30 mol% des anionischen Carboxylatmonomers, wie zum Beispiel Acrylsäure und ihre Salze,
- und von 45 bis 90 mol% mindestens eines wasserlöslichen nicht-ionischen Monomers, wie zum Beispiel Acrylamid.

12. Verfahren zur Frakturierung von unkonventionellen Öl- oder Gastanks, gemäß welchem:

- man das Frakturierungsfluid nach einem der Ansprüche 1 bis 9 herstellt,
- man das Fluid unter Druck derart injiziert, dass Frakturen erzeugt werden, die senkrecht zum Produktionsbohrloch verteilt sind.

13. Verfahren nach Anspruch 12, **dadurch gekennzeichnet, dass** man in den Tank daraufhin mindestens eine oxidierende Verbindung und/oder mindestens eine grenzflächenaktive Verbindung injiziert.

## Claims

1. Fracturing fluid comprising, in solution in water, a proppant and an associative amphoteric polymer, the said polymer having a molecular weight of at least 1 000 000 g/mol, and comprising:

- 0.01 to 10 mol% of at least one acrylamide-derived cationic monomer containing a hydrophobic chain and of

general formula (I):

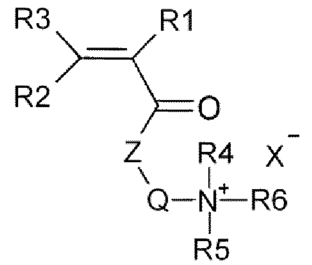

(I)

in which:

R1, R2: independently, a hydrogen, $CH_3$, $CH_2COOH$, COOH, $CH_2COOR_7$ $COOR_7$, $CH_2CONR_7R_8$, $CONR_7R_8$
R3, R4, R5: independently, a hydrogen, $CH_3$, $C_2H_5$
R6: an alkyl or arylalkyl chain comprising from 8 to 30 carbons
Q: an alkyl chain comprising from 1 to 8 carbons
Z: oxygen or $NR_7$
R7, R8; independently, a hydrogen, an alkyl chain comprising from 1 to 8 carbons
X: a halide chosen from the group comprising bromide, chloride, iodide, fluoride, or a counterion of negative charge,

- from 0.09 to 89.99 mol% of at least one anionic monomer;
- and from 10 to 99 mol% of at least one nonionic water-soluble monomer.

2. Fracturing fluid according to Claim 1, **characterized in that** it further contains up to 500 ppm of at least one surfactant.

3. Fracturing fluid according to claim 1 or 2, **characterized in that**:

- R1, R2: independently, a hydrogen atom or $CH_3$,
- R3: hydrogen,
- R4, R5: $CH_3$,
- Q: an alkyl chain comprising 2 or 3 carbons,
- Z: oxygen or NH.

4. Fracturing fluid according to one of the preceding claims, **characterized in that** the proppant is chosen from the group comprising sand, ceramic, bauxite, glass beads and resin-impregnated sand.

5. Fracturing fluid according to one of the preceding claims, **characterized in that** the proppant represents from 0.5% to 40% of the fluid, preferentially from 1% to 25% of the fluid and advantageously from 1.5% to 20% by weight of the fluid.

6. Fracturing fluid according to one of the preceding claims, **characterized in that** the polymer represents from 0.05% to 2%, preferentially from 0.1% to 1% and advantageously from 0.1% to 0.75% by weight of the fluid.

7. Fracturing fluid according to one of the preceding claims, **characterized in that** the cationic monomers derived from acrylics (acrylate or acrylamido) are chosen from the group comprising N-acrylamidopropyl-N,N-dimethyl-N-dodecylammonium chloride (DMAPA Cl(C12)), N-methacrylamidopropyl-N,Ndimethyl-N-dodecylammonium chloride (DMAPMA Cl(C12)), N-acrylamidopropyl-N,N-dimethyl-N-dodecylammonium bromide (DMAPA Br(C 12)), N-methacrylamidopropyl-N,N-dimethyl-N-dodecylammonium bromide (DMAPMA Br(C12)), N-acrylamidopropyl-N,N-dimethyl-N-octadecylammonium chloride (DMAPA Cl(C18)), N-methacrylamidopropyl-N,N-dimethyl-N-octadecylammonium chloride (DMAPMA Cl(C18)), N-acrylamidopropyl-N,N-dimethyl-N-octadecylammonium bromide (DMAPA Br(C 18)), N-methacrylamidopropyl-N,N-dimethyl-N-octadecylammonium bromide (DMAPMA Br(C18)), N-ethylhemimaleate, N,N-dimethyl, N-decylammonium bromide, N-ethylacrylate N,N-dimethylN- dodecylammonium bromide.

8. Fracturing fluid according to one of the preceding claims, **characterized in that** the anionic monomers are chosen from the group comprising acrylic acid, methacrylic acid, itaconic acid, crotonic acid, maleic acid, fumaric acid, 2-acrylamido-2-methylpropanesulfonic acid, vinylsulfonic acid, vinylphosphonic acid, allylsulfonic acid, allylphosphonic acid, styrenesulfonic acid and the water-soluble alkali metal, alkaline-earth metal and ammonium salts thereof.

9. Fracturing fluid according to one of the preceding claims, **characterized in that** the nonionic monomers are chosen from the group comprising acrylamide and methacrylamide, N-isopropylacrylamide, N,N-dimethylacrylamide, N-tert-butylacrylamide, N-vinylformamide, N-vinylacetamide, N-vinylpyridine and/or N-vinylpyrrolidone, acryloylmorpholine, acryloylpyrrolidone and alkyl-polyethylene glycol methacrylates.

10. Fracturing fluid according to one of Claims 1 to 6, **characterized in that** the polymer comprises:

- from 0.05 to 5 mol% of hydrophobic cationic monomer,
- from 5 to 54.95 mol% of at least one anionic monomer, advantageously acrylic acid and/or methacrylic acid and/or 2-acrylamido-2-methylpropanesulfonic acid and salts thereof,
- and from 45 to 90 mol% of at least one water-soluble nonionic monomer, advantageously acrylamide and/or N-isopropylacrylamide and/or N-N-dimethylacrylamide and/or N-tert-butylacrylamide and/or N-vinylformamide and/or N-vinylpyrrolidone and/or acryloylmorpholine and/or acryloylpyrrolidone.

11. Fracturing fluid according to one of Claims 1 to 6, **characterized in that** the polymer comprises:

- from 0.05 to 2 mol% of hydrophobic cationic monomer,
- from 5 to 24.95 mol% of at least one sulfonated anionic monomer such as 2-acrylamido-2-methylpropanesulfonic acid and salts thereof,
- from 0 to 30 mol% of an anionic carboxylate monomer such as acrylic acid and salts thereof,
- and from 45 to 90 mol% of at least one water-soluble nonionic monomer, such as acrylamide.

12. Process for fracturing an unconventional oil or gas reservoir, according to which:

- the fracturing fluid according to one of Claims 1 to 9 is prepared,
- the fluid is injected under pressure so as to create fractures distributed perpendicularly to the production well.

13. Process according to Claim 12, **characterized in that** at least one oxidizing compound and/or at least one surfactant is then injected into the reservoir.

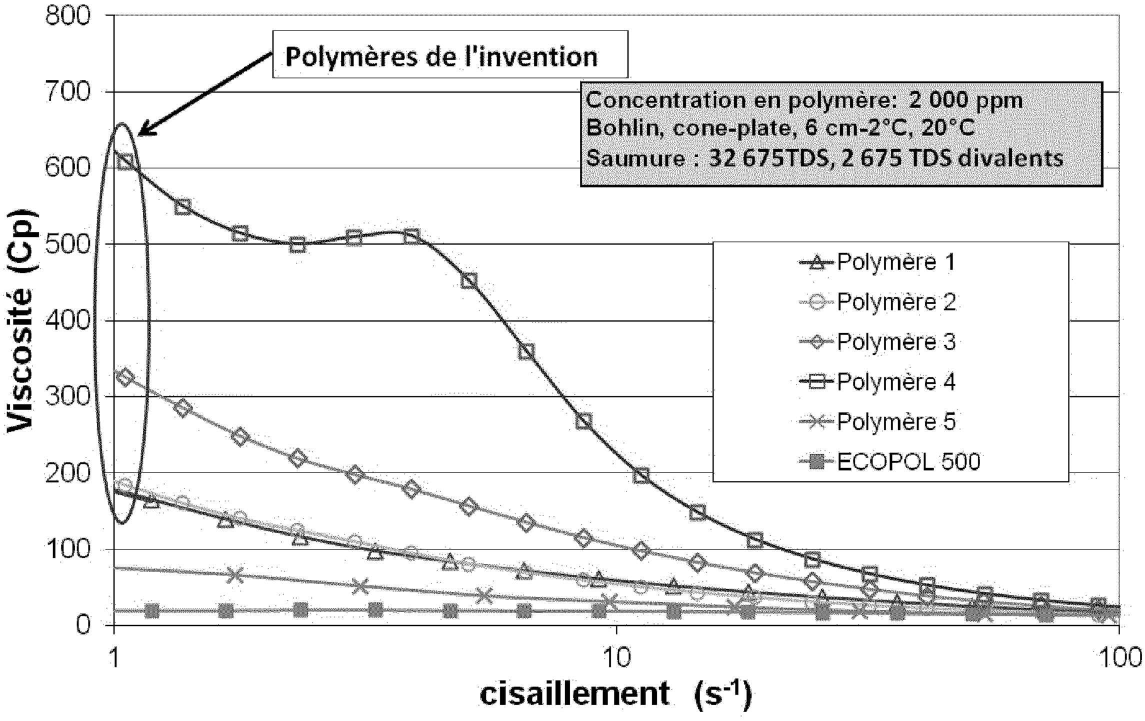


*Figure 1* : *Viscosité en fonction du cisaillement des différents polymères dans une eau de mer synthétique (30 g/l de NaCl et 3 g/l de $CaCl_2$, $2H_2O$) à 20°C.*

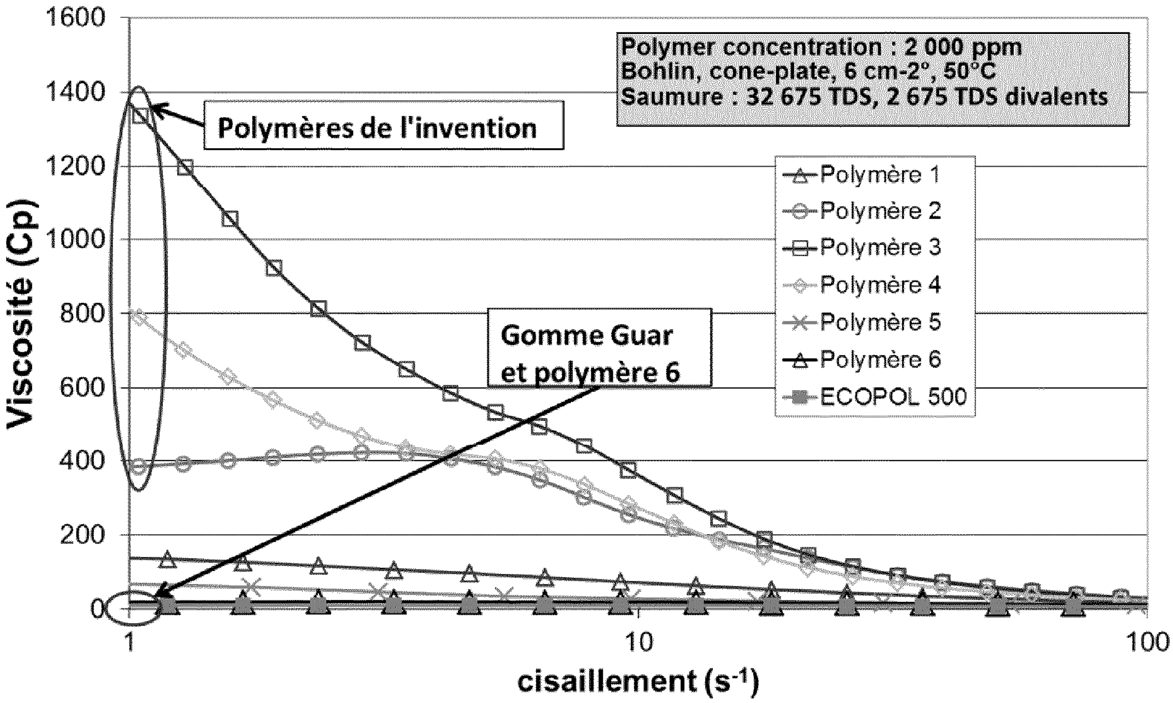


*Figure 2* : *Viscosité en fonction du cisaillement des différents polymères dans une eau de mer synthétique (30 g/l de NaCl et 3 g/l de $CaCl_2$, $2H_2O$) à 50°C.*

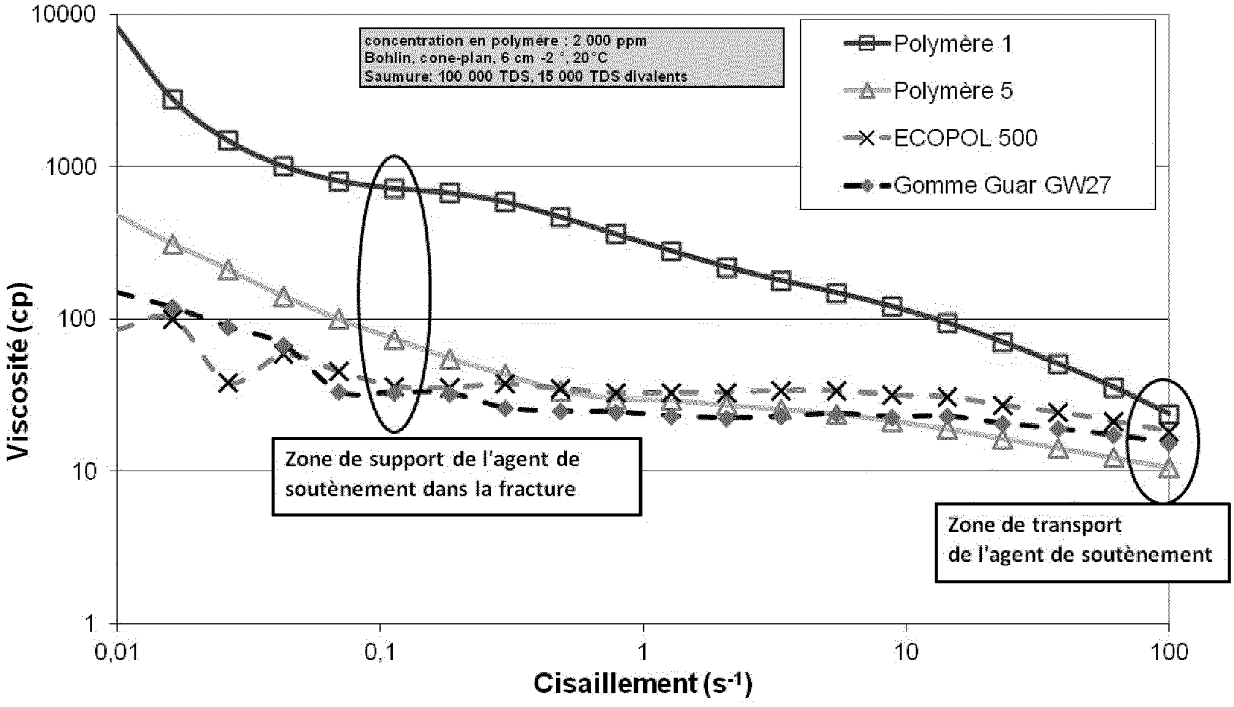


*Figure 3 : Influence du cisaillement sur la viscosité du polymère : Comparaison avec différentes gommes guar dans une saumure très salée.*

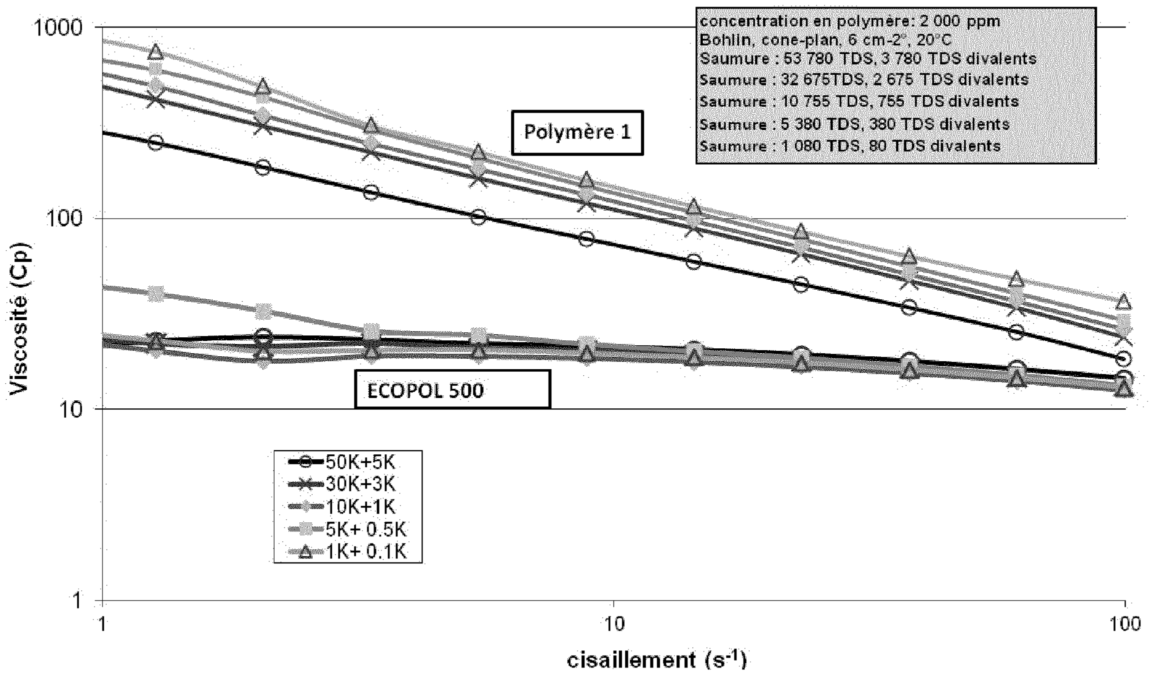


*Figure 4 : Influence du cisaillement sur la viscosité du polymère à différentes salinité : comparaison du polymère 1 et de la gomme guar ECOPOL 500*

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4033415 A
- US 3888312 A
- US 4801389 A
- GB 951147 A
- US 3727689 A
- US 3841402 A
- US 3938594 A
- US 4432881 A
- WO 02102917 A
- WO 02084075 A
- US 20110118153 A
- WO 2008107492 A
- WO 2010020698 A